# EUROPÄISCHE PATENTSCHRIFT

(11) **EP 2 329 159 B1**
(45) Veröffentlichungstag und Bekanntmachung des Hinweises auf die Patenterteilung: **21.11.2012**
(21) Anmeldenummer: 09744041.6
(22) Anmeldetag: 01.10.2009
(51) Int. Cl.: F16D 1/072, B62D 33/067

(54) **HOHLWELLEN-VERBINDUNGSEINRICHTUNG**
HOLLOW SHAFT CONNECTION DEVICE
DISPOSITIF DE LIAISON D'ARBRE CREUX

(30) Priorität: 02.10.2008 DE 102008049940
(43) Veröffentlichungstag der Anmeldung: 08.06.2011
(73) Patentinhaber: ZF Friedrichshafen AG, 88038 Friedrichshafen (DE)
(72) Erfinder: EISMANN, Jens, 49326 Melle (DE); BUHL, Manfred, 49143 Bissendorf (DE); LANGHORST, Friedhelm, 49356 Diepholz (DE)
(86) Internationale Anmeldenummer: PCT/DE2009/050053
(87) Internationale Veröffentlichungsnummer: WO 2010/037381

(56) Entgegenhaltungen:
- EP-A- 2 065 233
- DE-A1- 4 342 809
- DE-B4-102005 056 878

## Beschreibung

Die Erfindung betrifft eine Verbindungseinrichtung zur drehmomentübertragenden Kopplung einer Hohlwelle an ein Anschlussbauteil, gemäß dem Oberbegriff des Patentanspruchs 1.

Verbindungseinrichtungen der eingangs genannten Art kommen zur Verbindung aller Arten von drehmomentübertragenden Bauteilen mit zugehörigen Wellen bzw. Hohlwellen zum Einsatz. Beispielsweise - jedoch keineswegs ausschließlich - werden gattungsgemäße Verbindungen bei der Montage von Momentenhebeln bzw. Lenkern an Torsionsstäben bzw. Stabilisatoreinrichtungen eingesetzt. Ein lediglich beispielhaftes Einsatzgebiet liegt dabei im Bereich der stoß- und schwingungsdämpfenden Aufhängung von Kraftfahrzeug-Fahrerkabinen, insbesondere bei Lastkraftwagen und ähnlichen Schwerlastfahrzeugen, um die Fahrerkabine auf diese Weise bezüglich Schwingungen und Bewegungen vom Fahrzeugchassis zu entkoppeln.

Da bei Schwerlastfahrzeugen die Federraten der Fahrwerksfedern aufgrund der hohen Fahrzeuglasten unvermeidlich hoch ausfallen, werden Fahrbahnunebenheiten oder auch aus Achsen und Antriebsstrang resultierende Schwingungen und Körperschall noch zu einem erheblichen Teil über die Achsfederung auf das Chassis übertragen. Um im Sinne der Ergonomie und des Arbeitsschutzes für den Fahrer die Übertragung derartiger andauernder Stöße und Vibrationen auf das Fahrerhaus und somit auf den Arbeitsplatz des Fahrers zu minimieren, sind Fahrerhausaufhängungen entwickelt worden, bei denen das Fahrerhaus bzw. die Fahrerkabine unter Verwendung eines eigenen Aufhängungssystems am Fahrzeugchassis abgestützt ist.

Solche Aufhängungssysteme für die Fahrerkabine können dank der im Vergleich zur Fahrzeugmasse viel geringeren Masse der Fahrerkabine mit niedrigeren Federraten und weicheren Stoßdämpfern als diejenigen der Achsaufhängung selbst ausgelegt werden, weshalb Fahrbahnunebenheiten bzw. aus Antriebsstrang oder Achsen des Fahrzeugs stammende Schwingungen dank solcher weicherer Kabinen-Aufhängungssysteme deutlich besser vom Arbeitsplatz des Fahrers isoliert bzw. ferngehalten werden können.

Derartige Aufhängungseinrichtungen für Fahrerkabinen sind, insbesondere bei erhöhten Anforderungen an die Querkraftabstützung bzw. an die Kinematik - wie beispielsweise Nick- oder Wankunterdrückung sowie Seitenführung - konstruktiv aufwändig. So müssen neben den eigentlichen Feder- bzw. Dämpferelementen, ähnlich wie bei Achsaufhängungen von Kraftfahrzeugen, insbesondere Wankstabilisatoren vorgesehen werden, mit denen das unerwünschte, seitliche Wanken der Fahrerkabine relativ zum Fahrzeugchassis eingeschränkt werden kann.

Zur Wankstabilisierung - beispielsweise bei Schräg- oder Kurvenfahrt, aber auch beispielsweise im Fall einseitiger Fahrbahnunebenheiten - werden bei Aufhängungseinrichtungen für Fahrerkabinen nach dem Stand der Technik Wankstabilisatoren in Form von Torsionsstäben, bzw. in Form von Stabilisatorhohlwellen eingesetzt, wodurch die Einfederwege der auf die Fahrtrichtung bezogenen linken und rechten Aufhängungselemente der Fahrerkabine miteinander zu einem gewissen Grad gekoppelt werden.

Zur Einleitung der Kräfte, Momente und Bewegungen der Fahrzeugkabine in den Wankstabilisator sowie zum Zweck der Führung der Fahrzeugkabine in Längs- und Querrichtung sind dabei im Allgemeinen an den beiden axialen Enden des Wankstabilisators Momentenhebel oder Torsionsschenkel angebracht, deren stabilisatorfernes Ende jeweils mittels einer Lagerung mit der Fahrzeugkabine verbunden ist, während das stabilisatornahe Ende dieser Momentenhebel jeweils mit dem Wankstabilisator verbunden ist. Dabei stellt entweder der Stabilisator selbst die chassisfeste Lagerung der Momentenhebel dar, oder es ist am stabilisatornahen Ende der Momentenhebel jeweils eine zusätzliche Lagerstelle angeordnet, die zur beweglichen Anbindung der Momentenhebel am Chassis, sowie zur Einleitung der bei Wankbewegungen auftretenden Reaktionskräfte in das Chassis dient.

Gattungsgemäße Verbindungseinrichtungen, insbesondere zwischen Wankstabilisatoren und den diesen zugeordneten Momentenhebeln werden über der Lebensdauer jedoch sehr hohen Beanspruchungen ausgesetzt. Dies gilt insbesondere, wenn - beispielsweise aus Gründen der Gewichtsersparnis bei gleichzeitiger Erhöhung der Torsionssteifigkeit - Torsionsstäbe bzw. Stabilisatorwellen für Wankstabilisatoren in Form vergleichsweise dünnwandiger Torsionsrohre bzw. Hohlwellen ausgebildet werden.

Zur drehmomentübertragenden Verbindung derartiger Torsionsrohre oder Hohlwellen mit entsprechenden Anschlussbauteilen wie beispielsweise mit Momentenhebeln ist es aus dem Stand der Technik bekannt, die Momentenhebel mit den Torsionsrohren beispielsweise zu verschweißen, oder zu verpressen. In beiden Fällen stellt jedoch eine derartige hergestellte Verbindung zwischen Momentenhebel und Torsionsrohr eine hoch belastete potentielle Schwachstelle dar.

Bei einer Schweißverbindung zwischen Momentenhebel und Torsionsrohr hängt dies vor allem mit der beim Verschweißen eingebrachten Wärme und mit den damit verbundenen Gefügeänderungen sowie mit den an der Schweißnaht unvermeidlich auftretenden Kerbspannungen zusammen. Reine Pressverbindungen zwischen Torsionsrohr und Momentenhebel lassen sich zwar durch vergleichsweise schonende Kaltumformung herstellen, erreichen jedoch bei den auftretenden hohen Kräften und Momenten oftmals nicht die erforderliche Lebensdauer. Das gilt auch dann, wenn für die Hohlwelle - zum Zweck der Erhöhung des übertragbaren Drehmoments - im Bereich der Verbindung mit dem Anschlussbauteil eine Querschnittsform gewählt wird, die von der Kreisgestalt abweicht.

Dies hängt - insbesondere bei aus Gewichtsgründen eingesetzten, vergleichsweise dünnwandigen Torsionsrohren bzw. Hohlwellen - damit zusammen, dass die Rohrwandung im Bereich der Krafteinleitung in das Torsionsrohr nur begrenzte Druck- bzw. Scherkräfte übertragen kann. Aus diesem Grund können beispielsweise Presspassungen zwischen der Hohlwelle und dem Anschlussbauteil nicht mit dem zur Übertragung hoher Drehmomente erforderlichen festen Presssitz ausgeführt werden. Bei Überschreitung der vergleichsweise geringen übertragbaren spezifischen Kräfte kommt es deshalb entweder zu Ablösungen der Rohrwandung im Bereich des Presssitzes des Momentenhebels, oder aber die Rohrwandung kann eingedrückt werden, was das nachfolgende Versagen des Rohrquerschnitts zur Folge hat.

Zur Überwindung dieser Problematik ist in der gattungsbildender DE 10 2005 056 878 B4 vorgeschlagen worden, auf eine Schweißverbindung zwischen der Hohlwelle und dem Momentenhebel zu verzichten, und die Nachteile einer Pressverbindung damit zu umgehen, dass nach dem Herstellen der Pressverbindung zwischen Hohlwelle und Momentenhebel ein Stopfen in den Bereich der Pressverbindung eingetrieben wird, der das verhältnismäßig dünnwandige Rohr in diesem Bereich stützt und somit die dauerhaft sichere Übertragung hoher Drehmomente gewährleisten soll.

Trotz dieser vorgeschlagenen Verbesserung ist die aus dieser Druckschrift bekannte Möglichkeit zur Verbindung von Hohlwellen mit Anschlussbauteilen auf bestimmte Einsatzzwecke begrenzt, bzw. erfordert gegebenenfalls eine Reihe von zusätzlichen Baugruppen oder Bauelementen zur Realisierung weiterer Funktionen, wie sie insbesondere, jedoch keineswegs ausschließlich bei Wankstabilisatoren für Fahrerhäuser erforderlich sind. Zu diesen Funktionen bzw. Aufgaben gehören insbesondere die Bereitstellung von Anlenk- bzw. Lagerpunkten für die am Fahrerhaus bzw. am Chassis angeordneten Lagerböcke oder für weitere Baugruppen wie beispielsweise für Feder-/Dämpferelemente zur Aufhängung des Fahrerhauses.

Ferner erstreckt sich das Anwendungsgebiet gattungsgemäßer Verbindungseinrichtungen beispielsweise auch auf die Wankstabilisierung und Achsführung bei Fahrzeugachsen, insbesondere bei Nutzfahrzeugachsen. Zur Wankstabilisierung von Fahrzeugachsen werden im Stand der Technik hauptsächlich aus Vollmaterial bestehende, aus einem Stück gebogene Querstabilisatoren eingesetzt, die insbesondere bei schweren Nutzfahrzeugen eine dementsprechend hohe Masse aufweisen, und deren Materialausnutzungsgrad bezüglich der vorgesehenen Tordierung bzw. Verdrehsteifigkeit denkbar ungünstig ist. Hierbei scheiterte der Ersatz der massiven Querstabilisatoren durch größervolumige, vergleichsweise dünnwandige und damit leichtere Hohlwellen bisher oftmals an der problematischen Verbindungstechnik zwischen derartigen Hohlwellen und den drehmomentübertragenden Anschlussbauteilen wie beispielsweise Momentenhebeln. Ferner ist es auch bei derartigen Querstabilisatoren für Fahrzeugachsen wünschenswert, den Stabilisator neben der eigentlichen Funktion der Wankstabilisierung noch weitere Funktionalitäten bzw. Achsführungsaufgaben zu übertragen, um auf diese Weise konstruktiv einfachere, robustere und masseärmere Achsaufhängungen zu erhalten.

Mit diesem Hintergrund ist es somit Aufgabe der vorliegenden Erfindung, eine Verbindungseinrichtung zur drehmomentübertragenden Anbindung zwischen Hohlwellen und deren Anschlussbauteilen zu schaffen, mit der sich die genannten Nachteile überwinden lassen. Die Verbindungseinrichtung soll dabei die schadlose Übertragung hoher Drehmomente zwischen insbesondere dünnwandigen Hohlwellen und den jeweiligen Anschlussbauteilen, bei gleichzeitig hoher Versagenssicherheit ermöglichen. Zudem soll die Verbindung zwischen Hohlwelle und Anschlussbauteil in Produktion und Montage kostengünstig und prozesssicher darstellbar sein, und es sollen mittels der Verbindungseinrichtung auf einfache Weise weitere konstruktive Aufgaben, insbesondere Lagerfunktionen, realisiert werden können

Diese Aufgabe wird durch eine Verbindungseinrichtung mit den Merkmalen des Patentanspruchs 1 gelöst.

Bevorzugte Ausführungsformen sind Gegenstand der Unteransprüche.

Die Verbindungseinrichtung gemäß der Erfindung dient in für sich genommen zunächst einmal bekannter Weise der drehmomentübertragenden Anbindung eines Anschlussbauteils, beispielsweise eines Momentenhebels oder auch einer Nabe, an einer Hohlwelle. Das Anschlussbauteil umfasst - zur Aufnahme eines Endes der Hohlwelle - dabei eine zur Außenquerschnittsform der Hohlwelle formkorrespondierende, durchgehende Ausnehmung. Ferner enthält die Hohlwelle in zunächst ebenfalls bekannter Weise im Verbindungsbereich von Hohlwelle und Anschlussbauteil einen Pressstopfen. Der Pressstopfen bildet mit dem Innenquerschnitt der Hohlwelle zumindest bereichsweise eine Presspassung.

Hierdurch ergibt sich zunächst einmal bereits eine dauerfeste und hochbelastbare Verbindung zwischen der Hohlwelle und dem Anschlussbauteil, und es können auch vergleichsweise dünnwandige Hohlwellen mit entsprechenden Anschlussbauteilen wie beispielsweise Naben oder Momentenhebeln verbunden werden, ohne dass bei hoher Belastung der Verbindungseinrichtung die Gefahr des Versagens von Presssitz und/oder Rohrwandung im Bereich der Verbindungseinrichtung besteht. Dies hängt damit zusammen, dass der Pressstopfen die Rohrwandung der Hohlwelle im Bereich der Verbindungseinrichtung stützt und an die Innenoberfläche der Ausnehmung des Anschlussbauteils anpresst, so dass sich nicht nur zwischen Pressstopfen und Rohrwandung, sondern auch zwischen der äußeren Oberfläche der Hohlwelle und der Innenoberfläche der Ausnehmung des Anschlussbauteils eine Oberflächenpressung bzw. Presspassung ergibt.

Erfindungsgemäß jedoch zeichnet sich die Verbindungseinrichtung dadurch aus, dass der Pressstopfen gleichzeitig als Lageraufnahme für zumindest eine der Hohlwelle zugeordnete Lagerung ausgebildet ist. Dies ist vorteilhaft insofern, als der Pressstopfen auf diese Weise eine Doppelfunktion erhält, indem bisher konstruktiv separat zu verwirklichende Funktionen - wie beispielsweise die Lagerung der Hohlwelle - nun mit der Verbindungsfunktion des Pressstopfens konstruktiv vereint werden können.

Zu den Vorteilen, die sich hiermit ergeben, zählen zunächst einmal insbesondere die damit erreichbaren Gewichtsersparnisse und konstruktiven Vereinfachungen, der Entfall zusätzlicher Anbindungen, der Vorteil einer besonders kompakten Bauweise mit weniger Einzelbauteilen, die damit erreichbaren Verbesserungen bei der Zuverlässigkeit sowie die entsprechenden Kostenreduzierungen.

Da die zumindest eine der Hohlwelle zugeordnete Lageaufnahme dank der Erfindung nun einstückig mit dem Pressstopfen ausgebildet werden kann, entfällt die Notwendigkeit, diese Lagerung - wie im Stand der Technik - an dem mit der Hohlwelle zu verbindenden Anschlussbauteil, beispielsweise an einem Momentenhebel eines Wankstabilisators unterbringen zu müssen.

Dies birgt jedoch nicht nur die bereits genannten konstruktiven Vereinfachungen und die damit verbundenen Vorteile, sondern erlaubt zusätzlich auch kostensparende Modifizierungen des Momentenhebels selbst. Da dank der Erfindung zuvor am Momentenhebel erforderliche Lagerzapfen bzw. Lageraufnahmen-beispielsweise zur Aufhängung bzw. Lagerung des Stabilisatorssomit entfallen können, werden auch die auf den Momentenhebel wirkenden Belastungskräfte sowie die Stabilitätsanforderungen an den Momentenhebel reduziert. Dadurch wird es beispielsweise möglich, den Momentenhebel nicht mehr als vergütetes Schmiedeteil ausführen zu müssen, sondern unvergütet oder als kostengünstiges Gussteil ausführen zu können, und damit weitere Folgekosten einzusparen.

Vorzugsweise bildet dabei der Pressstopfen unmittelbar einen Lagerbolzen für eine Lagerbuchse der zumindest einen der Hohlwelle zugeordneten Lagerung. Auf diese Weise lässt sich eine besonders kompakte und robuste Lagerung realisieren.

Gemäß einer besonders bevorzugten Ausführungsform der Erfindung sind auf dem Pressstopfen Lagerbuchsen von mehr als einer Lagerung angeordnet bzw. können dort angeordnet werden. Auf diese Weise ergibt sich die Möglichkeit, weitere Zusatzfunktionen konstruktiv ebenfalls auf dem Pressstopfen zu vereinen, wodurch insbesondere weiterer Bauraum, weitere Masse, und zusätzliche Kosten eingespart werden können. Auch lässt sich hierdurch mit geringerem Aufwand eine Aufhängung bzw. Lageranordnung mit höheren Gesamtsteifigkeiten erzielen.

Die Erfindung lässt sich zunächst einmal unabhängig davon verwirklichen, welcher Art die Hohlwelle und das darauf anzuordnende Anschlussbauteil ist, da sich die erfindungsgemäße Verbindungseinrichtung grundsätzlich für jede Verbindung eines nabenartigen Bauteils mit dem Ende einer Hohlwelle eignet.

Gemäß einer bevorzugten Ausführungsform der Erfindung ist die Hohlwelle jedoch eine Drehstabfeder bzw. Torsionsfeder, wobei das Anschlussbauteil einen Torsionsschenkel der Torsionsfeder bildet, und wobei die am Pressstopfen angeordnete zumindest eine Lagerung eine Lagerstelle der Torsionsfeder bildet. Auf diese Weise wird bei einer Torsionsfeder eine konstruktiv vorteilhafte Doppelfunktion des den Drehstab und den Torsionsschenkel verbindenden Pressstopfens erreicht insofern, als der Pressstopfen auf diese Weise sowohl als Befestigungsmittel für den Torsionsschenkel am Drehstab, als auch als Lagerstelle zur Aufhängung bzw. Lagerung des Drehstabs dient.

Die Erfindung wird unabhängig vom konkreten Einsatzzweck der erfindungsgemäßen Verbindungseinrichtung verwirklicht, da die Verbindungseinrichtung grundsätzlich bei den verschiedensten Arten von WellenNaben-Verbindungen zum Einsatz kommen kann. Gemäß einer weiteren bevorzugten Ausführungsform der Erfindung bildet die Hohlwelle jedoch einen Wankstabilisator eines Fahrerhauses eines Nutzfahrzeugs, beispielsweise eines Lastkraftwagens. Dabei bildet das Anschlussbauteil einen Lenker zur Führung des Fahrerhauses, wobei die am Pressstopfen angeordnete zumindest eine Lagerung in einem mit dem Fahrzeugchassis oder mit dem Fahrerhaus verbundenen Lagerbock angeordnet werden kann. Hierdurch ergibt sich eine gegenüber den bekannten Lösungen zur Anbindung und Aufhängung eines Fahrerhausstabilisators erheblich vereinfachte Konstruktion insbesondere dadurch, dass eines der beiden bisher separat erforderlichen und jeweils am Führungslenker anzuordnenden Lager zur Verbindung des Wankstabilisators mit Chassis bzw. Fahrerhaus entfallen und stattdessen einfach auf dem entsprechend verlängerten Pressstopfen der erfindungsgemäßen Verbindungseinrichtung angeordnet werden kann.

Mit anderen Worten wird hierdurch eine Dreifachfunktion des Pressstopfens erreicht, indem dieser sowohl als Befestigungsmittel für den Führungslenker am Stabilisatorkörper, als Lagerstelle zur Aufhängung des Stabilisators sowie als Verbindung des Stabilisators mit dem Chassis bzw. Fahrerhaus dient. Auf diese Weise lässt sich ebenso die erwünschte Funktionsverdichtung des Wankstabilisators selbst erzielen, indem der Wankstabilisator auf konstruktiv besonders einfache und robuste Weise sowohl die Funktion eines Längslenkers für das Fahrerhaus, diejenige eines Querlenkers, als auch die Stabilisatorfunktion in sich vereint.

Gemäß einer alternativen Ausführungsform der Erfindung ist die Hohlwelle ein Wankstabilisator für eine Fahrzeugachse. Dabei ist das Anschlussbauteil der Verbindungseinrichtung ein Lenker zur Verbindung mit der Achse bzw. zur Führung der Achse, und die am Pressstopfen angeordnete zumindest eine Lagerung stellt die Lagerstelle eines mit dem Fahrzeugchassis oder mit der Achse verbundenen Lagerbocks dar.

Auch bei dieser Ausführungsform der Erfindung ergibt sich die vorteilhafte Dreifachfunktion des Pressstopfens insofern, als der Pressstopfen hier sowohl als Befestigungsmittel für den Momentenhebel bzw. Führungslenker am Wankstabilisator, als Lagerstelle zur Aufhängung des Stabilisators selbst, sowie zusätzlich als Verbindungsmittel zwischen Stabilisator und Achse bzw. Chassis dient.

Diese Ausführungsform bringt den zusätzlichen Vorteil mit sich, dass ein Wankstabilisator einer Kraftfahrzeug-Achsanbindung auf diese Weise - insbesondere im Fall schwerer Nutzfahrzeuge - zusätzlich auch anspruchsvolle Lenker- bzw. Radführungsaufgaben übernehmen kann, wodurch andernfalls erforderliche Baugruppen, entsprechender Bauraum und Masse sowie die damit verbundenen Kosten eingespart werden können.

Gemäß einer weiteren bevorzugten Ausführungsform der Erfindung ist auf dem Pressstopfen die Lagerbuchse einer Lagerung für ein Feder-/Dämpferelement angeordnet. Dabei kann diese Lagerbuchse entweder alternativ oder zusätzlich zu der auf dem Pressstopfen angeordneten Lagerung der Hohlwelle vorhanden sein.

Auf diese Weise kann der Pressstopfen nun sogar eine Vierfachfunktion erhalten, nämlich indem der Pressstopfen die Funktion des Verbindungsmittels eines Lenkers oder Torsionsschenkels mit einer Hohlwelle, die Funktion einer Lagerstelle für die Hohlwelle, die Funktion der Verbindung der Hohlwelle mit einem Anschlussbauteil (beispielsweise Chassis, Achse oder Fahrerhaus) sowie zusätzlich die Funktion eines Angriffspunkts für eine federnde/dämpfende Aufhängung (beispielsweise für eine Achse oder ein Fahrerhaus) bildet.

Es wird mit anderen Worten dank der Erfindung eine überaus kompakte Baugruppe insbesondere für Stabilisatoren oder Stabilenker (= Kombination aus Stabilisator und Führungslenker, beispielsweise für eine Achse oder ein Führerhaus) geschaffen, mit der Bauraum, Masse und Kosten in erheblichem Umfang eingespart werden können, wobei sich die konstruktiven Eigenschaften wie Steifigkeit, Dauerfestigkeit und einfache Montage-gegenüber dem Stand der Technik - zudem gleichzeitig noch verbessern lassen.

Zur Verwirklichung der Erfindung ist es dabei zunächst nicht wesentlich, welche Querschnittsform der Außenumfang der Hohlwelle sowie die Ausnehmung des Anschlussbauteils im Verbindungsbereich mit dem Anschlussbauteil aufweist. Vielmehr lässt sich der erfindungsgemäße Pressstopfen prinzipiell bereits bei Hohlwellen mit im Verbindungsbereich kreisförmigem Außenquerschnitt nutzbringend einsetzen.

Gemäß einer bevorzugten Ausführungsform der Erfindung weisen jedoch sowohl die Hohlwelle als auch das Anschlussbauteil und der Pressstopfen - zumindest im Verbindungsbereich mit dem Anschlussbauteil-eine von der Kreisgestalt abweichende Querschnittsform auf. Auf diese Weise lässt sich das zwischen Hohlwelle und Anschlussbauteil übertragbare Drehmoment entscheidend steigern, da hiermit, zusätzlich zum Kraftschluss durch den Presssitz und durch den Pressstopfen, noch der Formschluss aufgrund des von der Kreisgestalt abweichenden Verbindungsquerschnitts hinzukommt.

Die Erhöhung des übertragbaren Drehmoments stellt sich dabei zunächst einmal unabhängig von der konkreten, von der Kreisgestalt abweichenden Querschnittsform der Hohlwelle sowie des Pressstopfens und der Ausnehmung des Anschlussbauteils ein. So ist es beispielsweise vorstellbar, die Hohlwelle (im Verbindungsbereich), den Pressstopfen und die Anschlussausnehmung mit ovaler oder elliptischer Querschnittsform auszuführen, womit insbesondere eine nur minimale zusätzliche Kerbwirkung auftritt. Anwendungs- und ausführungsabhängig kann sich - wie die Anmelderin herausgefunden hat - auf diese Weise sogar ein deutlich günstigerer Betriebsspannungsverlauf einstellen, als dies bei kreisförmiger Querschnittsform des Verbindungsbereichs der Fall ist.

Gemäß einer weiteren, bevorzugten Ausführungsform der Erfindung weist die Hohlwelle sowie die Ausnehmung des Anschlussbauteils jedoch jeweils einen im Wesentlichen polygonalen Querschnitt auf. Hierdurch wird ein besonders inniger Formschluss zwischen Hohlwelle und Anschlussbauteil erreicht, und es lassen sich besonders hohe Drehmomente übertragen.

Vorzugsweise besitzt dabei die polygonale Außenquerschnittsform der Hohlwelle bzw. die hierzu formkorrespondierende Innenquerschnittsform der Ausnehmung des Anschlussbauteils - sowie der Außenumfang des Pressstopfens - eine stets endliche Krümmung. Dies bedeutet mit anderen Worten, dass die Querschnittsformen von Hohlwelle, Anschlussbauteil und Pressstopfen jeweils keine scharfen Kanten aufweisen, sondern dass die Kanten der polygonalen Querschnittsformen vielmehr abgerundet ausgeführt sind. Auf diese Weise wird die im Bereich der Polygonkanten im Material auftretende Kerbwirkung erheblich reduziert, und das langfristig schadfrei übertragbare Drehmoment kann erhöht werden.

Gemäß einer weiteren bevorzugten Ausführungsform der Erfindung ist die Querschnittsform von Hohlwelle und Anschlussbauteil im Verbindungsbereich als Gleichdick ausgebildet. Das sog. Gleichdick stellt eine geschlossene Linie als Querschnittsform dar, die - ähnlich wie ein einem Quadrat einbeschriebener Kreis - in jeder Winkelposition innerhalb eines passenden Quadrats stets alle vier Seiten des Quadrats berührt. Das Gleichdick als Querschnittsform von Hohlwelle und Anschlussbauteil im Verbindungsbereich stellt somit einen besonders effektiven Kompromiss zwischen dem Polygon mit optimalem Formschluss, aber hoher Kerbwirkung einerseits, und dem kreisförmigem Querschnitt, ohne Formschluss sowie ohne Kerbwirkung, andererseits dar.

Nach einer weiteren bevorzugten Ausführungsform der Erfindung sind der Pressstopfen und die Ausnehmung des Anschlussbauteils im Verbindungsbereich von Hohlwelle und Anschlussbauteil in wellenaxialer Richtung leicht konisch zulaufend ausgebildet. Auf diese Weise ergeben sich beim Einpressen des Pressstopfens höhere sowie gleichmäßigere Flächenpressungen zwischen Pressstopfen, Hohlwelle und Ausnehmung des Anschlussbauteils. Damit lassen sich also höhere Drehmomente sicher übertragen, und zudem ergibt sich eine höhere Abreißfestigkeit des Anschlussbauteils in Axialrichtung, da der Pressstopfen das zuvor prismatische Ende der Hohlwelle beim Einpressen auftreibt und dabei an die sich konisch verjüngende Innenkontur des Anschlussbauteils presst. Auch muss dank dieser Ausführungsform die Passung zwischen der Ausnehmung des Anschlussbauteils und dem Außenquerschnitt des Pressstopfens u.U. weniger exakt gefertigt werden.

Gemäß einer weiteren bevorzugten Ausführungsform der Erfindung ist vorgesehen, dass der Pressstopfen hohl ist, oder eine Ausnehmung in der Axialrichtung aufweist. Dies führt einerseits zu einer Gewichtsersparnis beim Pressstopfen und erlaubt andererseits eine Verbesserung des Kraftlinienverlaufs im Bereich der Pressverbindung, aufgrund der dann geringeren Wanddickensprünge an der Stelle des Eintritts der Hohlwelle in die Pressverbindung.

Die Erfindung lässt sich zunächst einmal unabhängig von der konkreten Materialwahl für den Pressstopfen verwirklichen. Vorzugsweise ist der Pressstopfen jedoch aus einem Eisenwerkstoff (beispielsweise Stahl) bzw. aus einem Nicht-Eisen-Metall (beispielsweise Aluminium) gefertigt. Ein Pressstopfen aus Stahl lässt sich kostengünstig darstellen, bietet gleichzeitig eine hohe Festigkeit und erlaubt die Erzeugung hoher Flächenpressungen. Ein Pressstopfen aus Aluminium ist insbesondere vorteilhaft bezüglich seines geringen Gewichts sowie bezüglich der hohen Duktilität von Aluminium. Letztere trägt ebenfalls zur Verringerung der schädlichen Kantenpressung und der damit verbundenen unerwünschten Kerbwirkung bei, die ansonsten insbesondere im Bereich des Eintritts der Hohlwelle in die Pressverbindung auftreten kann.

Nach einer weiteren bevorzugten Ausführungsform weist der Pressstopfen an seinem der Hohlwelle zugewandten Ende eine Anspitzung bzw. eine umlaufende Fase auf. Ein so gestalteter Pressstopfen lässt sich leichter einführen und montieren, ferner wird das Verkanten sowie eine etwaige Spanbildung, Beschädigung oder ein Abschälen von Material im Bereich der Innenoberfläche der Hohlwelle beim Einpressen des Pressstopfens in die Öffnung der Hohlwelle vermieden.

Eine weitere Ausführungsform der Erfindung sieht vor, dass die von der Kreisgestalt abweichende Querschnittsform der Hohlwelle im Wesentlichen lediglich im Verbindungsbereich der Hohlwelle mit dem Anschlussbauteil vorhanden ist. Mit anderen Worten bedeutet dies, dass die Hohlwelle außerhalb der Verbindungsbereiche mit den Anschlussbauteilen einen insbesondere kreisförmigen Querschnitt aufweisen kann. Hierdurch lassen sich Kosten bei der Herstellung der Hohlwelle einsparen, da die Hohlwelle gemäß dieser Ausführungsform lediglich an ihren beiden Enden die von der Kreisform abweichende Querschnittsform erhält.

Im Folgenden wird die Erfindung anhand lediglich Ausführungsbeispiele darstellender Zeichnungen näher erläutert. Es zeigt:
- **Fig. 1**: in isometrischer Darstellung einen Wankstabilisator für eine Fahrerkabine mit einer Pressstopfen-Verbindungseinrichtung gemäß dem Stand der Technik;
- **Fig. 2**: einen Pressstopfen der Verbindungseinrichtung gemäß **Fig. 1** in isometrischer Ansicht;
- **Fig. 3**: in einer **Fig.1** entsprechenden Darstellung und Ansicht einen Wankstabilisator für eine Fahrerkabine, mit einer Verbindungseinrichtung gemäß einer Ausführungsform der Erfindung;
- **Fig. 4**: in einer **Fig. 2** entsprechenden Darstellung und Ansicht einen Pressstopfen der Verbindungseinrichtung gemäß **Fig. 3****;**
- **Fig. 5**: in schematischer Darstellung einen Längsschnitt durch die Verbindungseinrichtung aus dem Stand der Technik gemäß **Fig. 1****;**
- **Fig. 6**: in einer **Fig. 5** entsprechenden Darstellung und Ansicht einen Längsschnitt durch eine Verbindungseinrichtung gemäß einer Ausführungsform der Erfindung; und
- **Fig. 7**: in einer **Fig. 5** und **6** entsprechenden Darstellung und Ansicht einen Längsschnitt durch eine erfindungsgemäße Verbindungseinrichtung gemäß **Fig. 2****.**

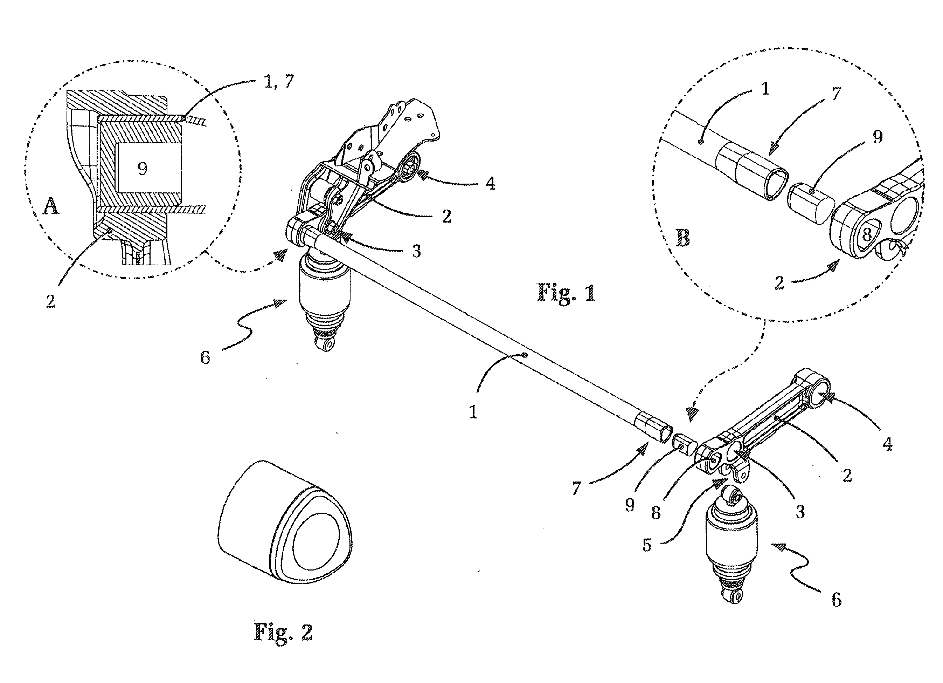

In Fig. 1 ist ein Wankstabilisator für eine Fahrerkabine dargestellt, wobei der dargestellte Wankstabilisator an beiden Enden jeweils eine Pressstopfen-Verbindungseinrichtung gemäß dem Stand der Technik aufweist. Man erkennt zunächst die als Torsionselement wirkende Hohlwelle 1, an deren beiden Enden jeweils ein Momentenhebel 2 angeordnet ist. Jeder der beiden Momentenhebel 2 trägt zunächst einmal zwei mit Elastomerlagern versehene Lagerstellen 3 und 4, wobei die wellennahe Lagerstelle 3 jeweils zur Verbindung des Wankstabilisators mit einem (nicht dargestellten) Fahrerhaus und die wellenferne Lagerstelle 4 jeweils zur Verbindung mit dem (ebenfalls nicht dargestellten) Fahrzeugchassis dient.

Die Funktion der Lagerstellenpaare 3, 4 jedes der beiden Momentenhebel 2 kann - unter Beibehaltung der Funktionalität des Wankstabilisators - jedoch auch umgekehrt werden, was bedeutet, dass die wellennahen Lagerstellen 3 am Chassis, die wellenfernen Lagerstellen 4 hingegen am Fahrerhaus angelenkt sind.

An einer weiteren Lagerstelle 5 jedes der beiden Momentenhebel 2 ist ferner eine Feder/Dämpfereinheit 6 angeordnet, die beim dargestellten Ausführungsbeispiel der federnden und dämpfenden Aufhängung des Fahrerhauses gegenüber dem Fahrzeugchassis dient.

In **Fig.1** wird ferner erkennbar, insbesondere anhand der vergrößerten Detaildarstellung "B", dass die Hohlwelle 1, die in ihrem mittleren Bereich einen kreisförmigen Querschnitt aufweist, in den Bereichen ihrer Enden 7 zu einer im Wesentlichen mit einem Gleichdick übereinstimmenden Querschnittsform aufgeweitet ist, wobei die Querschnittsform des Gleichdicks bei der dargestellten Ausführungsform von einem gleichschenkligen Dreieck abgeleitet ist. Die Momentenhebel 2 besitzen jeweils eine mit dem äußeren Querschnitt 7 der Hohlwelle 1 im Bereich 7 ihrer Enden übereinstimmende Ausnehmung 8, die somit ebenfalls mit dem Querschnitt des Gleichdicks 7 übereinstimmt.

Zur Montage eines derartigen Wankstabilisators werden zunächst einmal die beiden Momentenhebel 2 auf die zuvor zum Gleichdick aufgeweiteten Enden 7 der Hohlwelle 1 aufgesteckt oder aufgepresst. Anschließend werden die beiden endseitigen Öffnungen der Hohlwelle 1 jeweils mit einem Pressstopfen 9 verschlossen, dessen Umfangsform ebenfalls mit einem zur Querschnittsform von Hohlwelle 1 und Ausnehmung 8 des Momentenhebels 2 passenden Gleichdick übereinstimmt. Die Abmaße des Außenumfangs des Pressstopfens 9 sind dabei so gewählt, dass sich eine Presspassung zwischen der Ausnehmung 8 des Momentenhebels 2, der darin angeordneten Wandung 7 der Hohlwelle 1 und dem in der Hohlwelle 1 angeordneten Pressstopfen 9 einstellt.

Der Pressstopfen 9 ist vergrößert nochmals dargestellt in Detaildarstellung "A" (dort zusammen mit einem Ende der Hohlwelle 1 und einem Teil des Momentenhebels 2) sowie in **Fig. 2****.**

Man erkennt anhand **Fig.1****,** dass die Formgebung der Momentenhebel 2, sowie deren Anbindung an Chassis bzw. Fahrerhaus - insbesondere mittels der wellennahen Lagerstellen 3 - aufwändig ist und zahlreiche Einzelteile benötigt. Die aus dem Stand der Technik bekannte Konstruktion gemäß **Fig.1** ist somit tendenziell montage-, gewichts- und kostenintensiv, da sie zahlreicher unterschiedlicher Anbindungspunkte und Verbindungselemente mit erheblichem Bauraumbedarf bedarf. Auch ist die Anbindung zwischen den Momentenhebeln 2 und dem Fahrerhaus mittels der Lagerstellen 3, bzw. gegenüber den Feder/Dämpferelementen und damit dem Fahrzeugchassis mittels der zusätzlichen Lagerstellen 5 nicht nur aufwändig, sondern kann auch zu unerwünschten Elastizitäten in der Baugruppe führen. Zudem ist es aufgrund der Anordnung der Lagerstellen 3 und 5 an den Momentenhebeln 2 und aufgrund der daraus resultierenden Belastungen häufig erforderlich, die Momentenhebel 2 aufgrund des unmittelbaren Kraftangriffs als aufwändige, vergütete Schmiedeteile auszuführen.

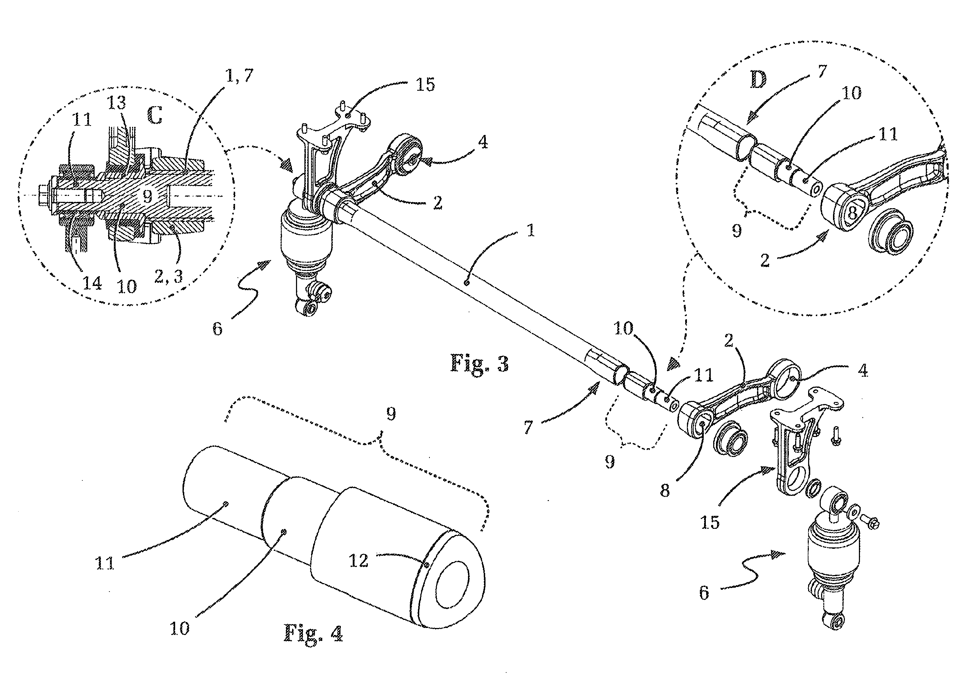

Im Unterschied dazu zeigt **Fig. 3** in einer mit **Fig. 1** zunächst einmal übereinstimmenden Ansicht einen Wankstabilisator für eine Fahrzeugkabine mit einer erfindungsgemäß ausgeführten Verbindungseinrichtung zwischen Momentenhebel 2 und Hohlwelle 1. Man erkennt, dass der Pressstopfen 9 bei dieser erfindungsgemäßen Verbindungseinrichtung - neben der Aufgabe der Verbindung zwischen Momentenhebel 2 und Hohlwelle 1- auch noch die Aufgaben der Lagerung und Ankopplung des dargestellten Wankstabilisators an das (nicht dargestellte) Fahrerhaus sowie an die Feder/Dämpferelemente 6, und damit an das Fahrzeugchassis in sich vereint.

Es sind bei der Erfindung mit anderen Worten die beim Stand der Technik noch aufwändig separaten Lagerstellen 3 und 5 - zur Verbindung des Wankstabilisators mit Fahrerhaus und Feder/Dämpferelementen (vgl. **Fig. 1**) - nun koaxial mit der Hohlwelle 1 des Wankstabilisators positioniert, sowie zusammen auf dem - mit entsprechenden Lagersitzen 10, 11 versehenen - Pressstopfen 9 angeordnet.

Dies führt, wie insbesondere anhand der zeichnungsbezogen linken, nicht explodiert dargestellten Lageranordnung erkennbar wird, zu einer baulich äußerst kompakten und konstruktiv deutlich vereinfachten und klareren Gestaltung der Anbindung des Wankstabilisators an Fahrerhaus und Chassis. Hierdurch werden eine ganze Anzahl komplizierter Einzelbauteile sowie Bauraum, Masse und Montagekosten in nicht unerheblichem Umfang eingespart. Gleichzeitig wird eine besonders zuverlässige und biegesteife Verbindung der einzelnen Baugruppen bzw. Lagerungen am Ende der Hohlwelle 1 des Wankstabilisators erreicht.

Zudem lassen sich dank der Erfindung die Momentenhebel 2 konstruktiv erheblich vereinfachen, da die zuvor an den Momentenhebeln 2 erforderlichen Anbindungen für die Lagerstellen 3 und 5 (vgl. **Fig. 1**) komplett entfallen können, bzw. durch die auf dem Pressstopfen 9 angeordneten Lagersitze 10, 11 ersetzt werden. Daher sind die Momentenhebel 2 bei der erfindungsgemäßen Verbindungseinrichtung gemäß **Fig. 3** tendenziell auch weniger belastet als bei der aus dem Stand der Technik bekannten Verbindungseinrichtung gemäß **Fig.1****,** und können daher mit einem weniger aufwändige Fertigungsverfahren hergestellt werden, beispielsweise als Gussteil anstelle als Schmiedeteil, oder unter Entfall eines beim Stand der Technik u.U. notwendigen Vergütungsschritts bei der Herstellung der Momentenhebel 2.

Die bei der Ausführungsform der Erfindung gemäß **Fig. 3** gewählte Gestalt des Pressstopfens 9 geht insbesondere aus einer Zusammenschau der Detaildarstellungen "C" und "D" mit der vergrößerten Darstellung des Pressstopfens gemäß **Fig. 4** hervor. In **Fig. 4** erkennt man zudem, dass der Pressstopfen an seinem der Hohlwelle zugewandten Ende mit einer umlaufenden Fase 12 versehen ist, um auf diese Weise das Einpressen des Pressstopfens in das Ende der Hohlwelle zu erleichtern. Zu demselben Zweck der Erleichterung des Einpressens kann zudem auch der Innenumfang des zugehörigen Endes der Hohlwelle bei 7 noch mit einer Fase versehen sein.

Der Pressstopfen 9 ist bei der Ausführungsform der Erfindung gemäß **Fig. 3** mit zwei einstückig angeformten, abgestuften Lagersitzen 10, 11 versehen. Wie insbesondere aus der Detaildarstellung "C" der **Fig. 3** hervorgeht, lässt sich zum Zweck der Montage des Wankstabilisators am Fahrzeug auf jedem der beiden Lagersitze 10, 11 je eine Lagerbuchse 13, 14 anordnen. Dabei gehört die dem ersten, größeren der beiden Lagersitze 10 zugeordnete Lagerbuchse 13 bei der dargestellten Ausführungsform zu einem Gleitlager, welches in einem Lagerbock 15 angeordnet und mittels des Lagerbocks 15 mit dem Fahrerhaus verbunden wird. Dieses erste Lager 10, 13 erfüllt somit eine Doppelfunktion, indem es gleichzeitig die drehbare Lagerung des Wankstabilisators einerseits, und die kraftübertragende Anbindung des Wankstabilisators am Fahrerhaus andererseits bildet.

Die dem zweiten, kleineren der beiden Lagersitze 11 des Pressstopfens 9 zugeordnete Lagerbuchse 14 gehört zu einem Elastomerlager. Über das Elastomerlager und das dort angreifende Feder/Dämpferelement 6 erfolgt - indirekt über das erste Lager 13 und den Lagerbock 15 - die federnde/dämpfende Aufhängung des Fahrerhauses am Fahrzeugchassis.

Die weitere Lagerstelle 4 am anderen Ende des Momentenhebels ist bei dieser Ausführungsform ebenfalls über ein Elastomerlager mit dem Fahrzeugchassis verbunden.

Ein zusätzlicher Vorteil des Einsatzes des Pressstopfens 9 liegt hier darin, dass zudem - aufgrund der lokalen Verstärkung der Hohlwelle 1 durch den eingepressten Stopfen 9 - die aufgrund der auf die Hohlwelle 1 einwirkenden Biegemomente auftretenden maximalen Biegespannungen in die weniger stark belasteten mittleren Bereiche der Hohlwelle 1 verlagert werden. Hierdurch wird die Dauerfestigkeit der erfindungsgemäßen Verbindungseinrichtung sowie des gesamten Wankstabilisators weiter verbessert.

Man erkennt insbesondere anhand der Detaildarstellung "C" von **Fig. 3**, dass der Pressstopfen 9 hier ferner eine zentrale Ausnehmung aufweist. Durch den somit teilweise hohl ausgeführten Pressstopfen 9 wird einerseits der Kraftlinienverlauf im Bereich der Verbindung zwischen Pressstopfen 9, Hohlwelle 1 und Momentenhebel 2 verbessert, die dort auftretenden Steifigkeitssprünge werden verringert, und es wird ferner auch Masse eingespart. Ferner geht aus der Detaildarstellung "C" nochmals deutlich hervor, dass die für sich genommen empfindliche, dünne Wandung der Hohlwelle 1, 7 hier vollständig formschlüssig zwischen der Ausnehmung 3 des Momentenhebels 2 und dem Pressstopfen 9 eingeschlossen ist. Auf diese Weise ergibt sich eine sichere Momentenübertragung trotz des - bei dieser Ausführungsform - mit vergleichsweise großen Krümmungsradien als Gleichdick ausgeführten Querschnitts von Ausnehmung 3, Hohlwellenende 7 und Pressstopfen 9, wodurch diese Querschnittsform damit auch zu einem besonders gleichmäßigen Kraftfluss beiträgt.

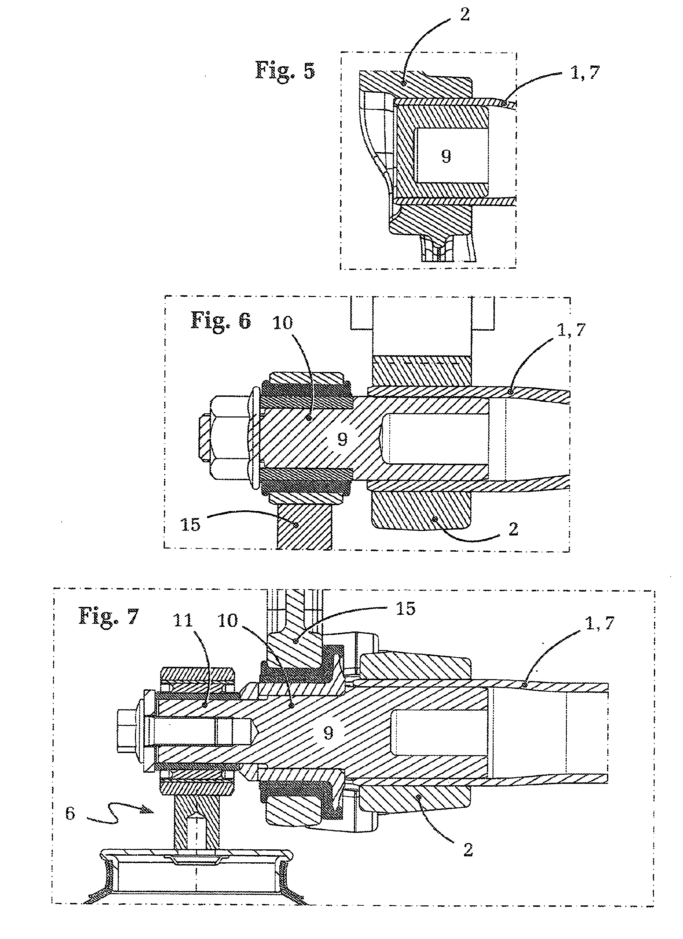

In den **Fig. 5**, **6** und **7** ist die Anbindung zwischen einem Ende 7 der Hohlwelle 1 und einem Momentenhebel 2 beim Stand der Technik (**Fig. 5**) sowie bei unterschiedlichen Ausführungsformen der Erfindung (**Fig. 6** und **7**) nochmals vergleichend dargestellt. Dabei entspricht **Fig. 5** der Detaildarstellung "A" bei dem Wankstabilisator gemäß dem Stand der Technik aus **Fig.1**; **Fig. 7** entspricht der Detaildarstellung "C" bei dem erfindungsgemäßen Wankstabilisator gemäß **Fig. 3**; während **Fig. 6** eine weitere Ausführungsform eines Wankstabilisators mit einer erfindungsgemäßen Verbindungseinrichtung zeigt.

Die weitere Ausführungsform gemäß **Fig. 6** unterscheidet sich von der oben beschriebenen Ausführungsform gemäß **Fig. 3**, **4** und **7** primär dadurch, dass der Pressstopfen 9 bei der Ausführungsform gemäß **Fig. 6** nicht wie bei **Fig. 7** zwei zusätzliche Lagersitze, sondern lediglich einen zusätzlichen Lagersitz 10 aufweist, der die Lagerung eines mit dem Chassis oder dem Fahrerhaus verbindbaren Lagerbocks 15 trägt.

Insbesondere anhand des Vergleichs der **Fig. 5** und **7** wird die dank der Erfindung ermöglichte, kompakte und robuste Vereinigung umfangreicher Lagerfunktionalitäten auf dem Pressstopfen nochmals ersichtlich.

Im Ergebnis wird somit deutlich, dass dank der Erfindung eine Verbindungseinrichtung zum drehmomentübertragenden Anschluss zwischen Hohlwellen und zugehörigen Anschlussbauteilen geschaffen wird, die neben der dauerhaften Übertragbarkeit hoher Drehmomente auch die zusätzliche Anbindung weiterer Baugruppen, insbesondere die unmittelbare Anbindung von Lagerstellen an der Verbindung zwischen Hohlwelle und Anschlussbauteil ermöglicht. Durch die mit der Erfindung ermöglichte Funktionsvereinigung lassen sich im Vergleich zum Stand der Technik eine Anzahl u.U. komplizierter Baugruppen, sowie ferner Bauraum und Masse in erheblichem Umfang einsparen; gleichzeitig wird eine zuverlässige und besonders biegesteife Verbindung unterschiedlicher Baugruppen bzw. Lagerungen am Ende einer Hohlwelle erreicht. Schließlich lässt die erfindungsgemäße Verbindungseinrichtung auch Kostenreduktionen in Produktion und Montage ebenso wie eine Verringerung des Wartungsbedarfs im Betrieb erwarten.

Die Erfindung leistet damit einen maßgeblichen Beitrag zur Weiterentwicklung der Technologie der Hohlwellen-Verbindungen, insbesondere im Bereich der vorgesehenen Anwendung bei Wankstabilisatoren, beispielsweise zur Lagerung von Fahrerhäusern von Nutzfahrzeugen, oder für Achsanbindungen insbesondere bei Lastkraftwagen.

### Bezugszeichenliste

- 1: Hohlwelle, Torsionsfeder
- 2: Anschlussbauteil, Momentenhebel, Torsionsschenkel
- 3, 4, 5: Lagerstelle
- 6: Feder/Dämpferelement
- 7: Endbereich, Verbindungsbereich
- 8: Ausnehmung
- 9: Pressstopfen
- 10, 11: Lagersitz
- 12: Fase
- 13, 14: Lagerung, Lagerbuchse
- 15: Lagerbock

## Patentansprüche

1. Verbindungseinrichtung zur drehmomentübertragenden Anbindung eines Anschlussbauteils (2) an einer Hohlwelle (1), das Anschlussbauteil (2) umfassend eine zu einem Außenquerschnitt der Hohlwelle (1) formkorrespondierende, durchgehende Ausnehmung (8) zur Aufnahme eines Endes der Hohlwelle (1), wobei die Hohlwelle (1) im Verbindungsbereich von Hohlwelle (1) und Anschlussbauteil (2) einen Pressstopfen (9) enthält, der mit dem Innenquerschnitt der Hohlwelle (1) zumindest bereichsweise eine Presspassung bildet,
**dadurch gekennzeichnet,**
**dass** der Pressstopfen (9) als Lageraufnahme (10, 11) für zumindest eine der Hohlwelle zugeordnete Lagerung (13, 14) ausgebildet ist.

2. Verbindungseinrichtung nach Anspruch 1,
**dadurch gekennzeichnet,**
**dass** der Pressstopfen (9) den Lagerbolzen (10, 11) für eine Lagerbuchse (13, 14) der zumindest einen Lagerung bildet.

3. Verbindungseinrichtung nach Anspruch 1 oder 2,
**dadurch gekennzeichnet,**
**dass** auf dem Pressstopfen (9) Lagerbuchsen (13, 14) von mehr als einer Lagerung anordenbar sind.

4. Verbindungseinrichtung nach einem der Ansprüche 1 bis 3,
**dadurch gekennzeichnet,**
**dass** die Hohlwelle eine Torsionsfeder (1) ist, wobei das Anschlussbauteil einen Torsionsschenkel der Torsionsfeder (1) und die zumindest eine Lagerung (13, 14) eine Lagerstelle der Torsionsfeder (1) bildet.

5. Verbindungseinrichtung nach einem der Ansprüche 1 bis 4,
**dadurch gekennzeichnet,**
**dass** die Hohlwelle (1) ein Wankstabilisator eines Lkw-Fahrerhauses ist, wobei das Anschlussbauteil (2) ein Lenker zur Führung des Fahrerhauses ist, und wobei die zumindest eine Lagerung (13) in einem mit Fahrzeugchassis oder Fahrerhaus verbindbaren Lagerbock (15) anordenbar ist.

6. Verbindungseinrichtung nach einem der Ansprüche 1 bis 4,
**dadurch gekennzeichnet,**
**dass** die Hohlwelle (1) ein Wankstabilisator für eine Fahrzeugachse ist, wobei das Anschlussbauteil (2) ein Lenker zur Führung der Achse ist, und wobei die zumindest eine Lagerung (13) in einem mit Fahrzeugchassis oder Achse verbindbaren Lagerbock (15) anordenbar ist.

7. Verbindungseinrichtung nach einem der Ansprüche 1 bis 6,
**dadurch gekennzeichnet,**
**dass** auf dem Pressstopfen (9) eine Lagerbuchse (14) einer Lagerung eines Feder-/Dämpferelements (6) angeordnet ist.

8. Verbindungseinrichtung nach einem der Ansprüche 1 bis 7,
**dadurch gekennzeichnet,**
**dass** Hohlwelle (1) und Ausnehmung (8) des Anschlussbauteils (2) eine von der Kreisgestalt abweichende Querschnittsform aufweisen.

9. Verbindungseinrichtung nach Anspruch 8,
**dadurch gekennzeichnet,**
**dass** Hohlwelle (1) und Ausnehmung (8) des Anschlussbauteils (2) einen im Verbindungsbereich (7) im Wesentlichen polygonalen Querschnitt aufweisen.

10. Verbindungseinrichtung nach Anspruch 8 oder 9,
**dadurch gekennzeichnet,**
**dass** der Umfang der polygonalen Querschnittsform eine stets endliche Krümmung aufweist.

11. Verbindungseinrichtung nach einem der Ansprüche 8 bis 10,
**dadurch gekennzeichnet,**
**dass** die Querschnittsform von Hohlwelle (1) und Anschlussbauteil (2) im Verbindungsbereich (7) als Gleichdick (7) ausgebildet ist.

12. Verbindungseinrichtung nach einem der Ansprüche 1 bis 11,
**dadurch gekennzeichnet,**
**dass** der Pressstopfen (9) und die Ausnehmung (8) des Anschlussbauteils (2) im Verbindungsbereich (7) von Hohlwelle (1) und Anschlussbauteil (2) leicht konisch zulaufend ausgebildet sind.

13. Verbindungseinrichtung nach einem der Ansprüche 1 bis 12,
**dadurch gekennzeichnet,**
**dass** der Pressstopfen (9) hohl ist bzw. eine Ausnehmung in der Axialrichtung aufweist.

14. Verbindungseinrichtung nach einem der Ansprüche 1 bis 13,
**dadurch gekennzeichnet,**
**dass** der Pressstopfen (9) spanlos gefertigt ist.

15. Verbindungseinrichtung nach einem der Ansprüche 1 bis 14,
**dadurch gekennzeichnet,**
**dass** der Pressstopfen an seinem der Hohlwelle (1) zugewandten Ende eine Anspitzung bzw. eine umlaufende Fase (12) aufweist.

16. Verbindungseinrichtung nach einem der Ansprüche 8 bis 15,
**dadurch gekennzeichnet,**
**dass** die die von der Kreisgestalt abweichende Querschnittsform der Hohlwelle (1) im Wesentlichen lediglich im Verbindungsbereich (7) mit dem Anschlussbauteil (2) vorhanden ist.

## Claims

1. Connecting device for the torque-transmitting attachment of a connecting component (2) to a hollow shaft (1), the connecting component (2) comprising a continuous recess (8), the shape of which corresponds to an external cross section of the hollow shaft (1), for receiving one end of the hollow shaft (1), the hollow shaft (1) comprising, in the connecting region of the hollow shaft (1) and connecting component (2), a press-fit plug (9) which forms a press fit at least in regions with the internal cross section of the hollow shaft (1), **characterized in that** the press-fit plug (9) is configured as a bearing seat (10, 11) for at least one bearing (13, 14) which is assigned to the hollow shaft.

2. Connecting device according to Claim 1, **characterized in that** the press-fit plug (9) forms the bearing pin (10, 11) for a bearing bush (13, 14) of the at least one bearing.

3. Connecting device according to Claim 1 or 2, **characterized in that** bearing bushes (13, 14) of more than one bearing can be arranged on the press-fit plug (9).

4. Connecting device according to one of Claims 1 to 3, **characterized in that** the hollow shaft is a torsion spring (1), the connecting component forming a torsion leg of the torsion spring (1) and the at least one bearing (13, 14) forming a bearing point of the torsion spring (1).

5. Connecting device according to one of Claims 1 to 4, **characterized in that** the hollow shaft (1) is an anti-roll bar of a lorry driver's cab, the connecting component (2) being a link for guiding the driver's cab, and it being possible for the at least one bearing (13) to be arranged in a bearing block (15) which can be connected to the vehicle chassis or driver's cab.

6. Connecting device according to one of Claims 1 to 4, **characterized in that** the hollow shaft (1) is an anti-roll bar for a vehicle axle, the connecting component (2) being a link for guiding the axle, and it being possible for the at least one bearing (13) to be arranged in a bearing block (15) which can be connected to the vehicle chassis or axle.

7. Connecting device according to one of Claims 1 to 6, **characterized in that** a bearing bush (14) of a bearing of a spring/damper element (6) is arranged on the press-fit plug (9).

8. Connecting device according to one of Claims 1 to 7, **characterized in that** the hollow shaft (1) and the recess (8) of the connecting component (2) have a cross-sectional shape which deviates from the circular form.

9. Connecting device according to Claim 8, **characterized in that** the hollow shaft (1) and the recess (8) of the connecting component (2) have a cross section which is substantially polygonal in the connecting region (7).

10. Connecting device according to Claim 8 or 9, **characterized in that** the periphery of the polygonal cross-sectional shape has a constantly finite curvature.

11. Connecting device according to one of Claims 8 to 10, **characterized in that** the cross-sectional shape of the hollow shaft (1) and connecting component (2) is configured as a curve of constant width (7) in the connecting region (7).

12. Connecting device according to one of Claims 1 to 11, **characterized in that** the press-fit plug (9) and the recess (8) of the connecting component (2) are configured so as to taper conically slightly in the connecting region (7) of the hollow shaft (1) and connecting component (2).

13. Connecting device according to one of Claims 1 to 12, **characterized in that** the press-fit plug (9) is hollow or has a recess in the axial direction.

14. Connecting device according to one of Claims 1 to 13, **characterized in that** the press-fit plug (9) is manufactured in a non-cutting manner.

15. Connecting device according to one of Claims 1 to 14, **characterized in that** the press-fit plug has a pointed section or a circumferential bevel (12) at its end which faces the hollow shaft (1).

16. Connecting device according to one of Claims 8 to 15, **characterized in that** that cross-sectional shape of the hollow shaft (1) which deviates from the circular form is present substantially only in the connecting region (7) to the connecting component (2).

## Revendications

1. Dispositif de liaison pour la liaison par transfert de couple d'un composant de raccordement (2) à un arbre creux (1), le composant de raccordement (2) comprenant un évidement continu (8) de forme correspondant à une section transversale extérieure de l'arbre creux (1), pour recevoir une extrémité de l'arbre creux (1), l'arbre creux (1) contenant, dans la région de liaison de l'arbre creux (1) et du composant de raccordement (2), un bouchon d'étanchéité (9) qui forme avec la section transversale intérieure de l'arbre creux (1) au moins en partie un ajustement serré,
**caractérisé en ce que**
le bouchon d'étanchéité (9) est réalisé sous forme de logement de palier (10, 11) pour au moins un support de palier (13, 14) associé à l'arbre creux.

2. Dispositif de liaison selon la revendication 1,
**caractérisé en ce que**
le bouchon d'étanchéité (9) forme le goujon de palier (10, 11) pour une douille palier (13, 14) de l'au moins un support de palier.

3. Dispositif de liaison selon la revendication 1 ou 2,
**caractérisé en ce que**
des douilles palier (13, 14) de plus d'un support de palier peuvent être disposées sur le bouchon d'étanchéité (9).

4. Dispositif de liaison selon l'une quelconque des revendications 1 à 3,
**caractérisé en ce que**
l'arbre creux est un ressort de torsion (1), le composant de raccordement formant une branche de torsion du ressort de torsion (1) et l'au moins un support de palier (13, 14) formant un point de palier du ressort de torsion (1).

5. Dispositif de liaison selon l'une quelconque des revendications 1 à 4,
**caractérisé en ce que**
l'arbre creux (1) est une barre antiroulis d'une cabine de conducteur de poids lourd, le composant de raccordement (2) étant un bras oscillant pour le guidage de la cabine de conducteur, et l'au moins un support de palier (13) pouvant être disposé dans un bloc-palier (15) pouvant être connecté au châssis du véhicule ou à la cabine du conducteur.

6. Dispositif de liaison selon l'une quelconque des revendications 1 à 4,
**caractérisé en ce que**
l'arbre creux (1) est une barre antiroulis pour un essieu de véhicule, le composant de raccordement (2) étant un bras oscillant pour le guidage de l'essieu, et l'au moins un support de palier (13) pouvant être disposé dans un bloc-palier (15) pouvant être connecté au châssis du véhicule ou à l'essieu.

7. Dispositif de liaison selon l'une quelconque des revendications 1 à 6,
**caractérisé en ce**
**qu'**une douille palier (14) d'un support de palier d'un élément de ressort/d'amortissement (6) est disposée sur le bouchon d'étanchéité (9).

8. Dispositif de liaison selon l'une quelconque des revendications 1 à 7,
**caractérisé en ce que**
l'arbre creux (1) et l'évidement (8) du composant de raccordement (2) présentent une forme en section transversale s'écartant d'une configuration circulaire.

9. Dispositif de liaison selon la revendication 8,
**caractérisé en ce que**
l'arbre creux (1) et l'évidement (8) du composant de raccordement (2) présentent une section transversale essentiellement polygonale dans la zone de liaison (7).

10. Dispositif de liaison selon la revendication 8 ou 9,
**caractérisé en ce que**
la périphérie de la forme en section transversale polygonale présente toujours une courbure à l'extrémité.

11. Dispositif de liaison selon l'une quelconque des revendications 8 à 10,
**caractérisé en ce que**
la forme en section transversale de l'arbre creux (1) et du composant de raccordement (2) est réalisée sous forme orbiforme (7) dans la zone de liaison (7).

12. Dispositif de liaison selon l'une quelconque des revendications 1 à 11,
**caractérisé en ce que**
le bouchon d'étanchéité (9) et l'évidement (8) du composant de raccordement (2) sont réalisés de manière à se terminer légèrement coniquement dans la zone de liaison (7) de l'arbre creux (1) au composant de raccordement (2).

13. Dispositif de liaison selon l'une quelconque des revendications 1 à 12,
**caractérisé en ce que**
le bouchon d'étanchéité (9) est creux et présente un évidement dans la direction axiale.

14. Dispositif de liaison selon l'une quelconque des revendications 1 à 13,
**caractérisé en ce que**
le bouchon d'étanchéité (9) est fabriqué sans enlèvement de copeaux.

15. Dispositif de liaison selon l'une quelconque des revendications 1 à 14,
**caractérisé en ce que**
le bouchon d'étanchéité présente sur son extrémité tournée vers l'arbre creux (1) une pointe ou un biseau périphérique (12).

16. Dispositif de liaison selon l'une quelconque des revendications 8 à 15,
**caractérisé en ce que**
la forme en section transversale de l'arbre creux (1) s'écartant de la configuration circulaire est essentiellement prévue uniquement dans la zone de liaison (7) au composant de raccordement (2).
